# EUROPÄISCHE PATENTSCHRIFT

(11) **EP 3 582 033 B1**
(45) Veröffentlichungstag und Bekanntmachung des Hinweises auf die Patenterteilung: **20.04.2022**
(21) Anmeldenummer: 18177416.7
(22) Anmeldetag: 12.06.2018
(51) Int. Cl.: G05B 19/042

(54) **VERFAHREN ZUR GESICHERTEN BEDIENUNG EINES FELDGERÄTS**
METHOD FOR SECURELY OPERATING A FIELD DEVICE
PROCÉDÉ DE FONCTIONNEMENT SECURISÉ D'UN APPAREIL DE TERRAIN

(43) Veröffentlichungstag der Anmeldung: 18.12.2019
(73) Patentinhaber: ABB Schweiz AG, 5400 Baden (CH)
(72) Erfinder: Fengler, Frank, 32427 Minden (DE)
(74) Vertreter: Maiwald Patent- und Rechtsanwaltsgesellschaft mbH

(56) Entgegenhaltungen:
- DE-A1-102014 112 611
- DE-B3-102012 214 018

## Beschreibung

Die Erfindung betrifft eine Verfahren zur gesicherten Bedienung eines Feldgeräts in der Prozessautomatisierung. Dazu gehören im Einzelnen aber nicht abschließend Messumformer, welche eine physikalische Prozessgröße - wie Temperatur, Druck, Durchflussmenge, Pegel, pH-Wert oder dergleichen - in eine elektrische Größe - wie Strom, Spannung, Frequenz, Pulsfolge oder dergleichen - umformen sowie Aktuatoren, welche eine elektrische Größe in eine physikalische Größe - wie Stellung vom Klappen oder Ventilen zur Durchflussmengenbegrenzung - umsetzen.

Derartige Feldgeräte weisen zumindest eine Mensch-Maschine-Schnittstelle umfassend eine Anzeigevorrichtung und eine Tastatur auf, welche zur Bedienung des Feldgeräts geeignet ist. Darüber hinaus weist ein solches Feldgerät eine Kommunikationsschnittstelle zum Anschluss eines lokalen Bediengeräts auf. Als lokale Bediengeräte sind insbesondere aber nicht abschließend tragbare Computer, wie Notebooks oder Tablet-Computer, sowie Smartphones geeignet, welche insbesondere aber nicht abschließend drahtgebunden über USB oder drahtlos über NFC oder Bluetooth mit dem Feldgerät kommunizieren.

Üblicherweise sind solche Feldgeräte in ein Netzwerk zur Prozessteuerung eingebunden. Über dieses Netzwerk werden die elektrische Größen von Messwerten und/oder Stellwerten zwischen dem jeweiligen Feldgerät und einer Prozesssteuerungseinrichtung übertragen. Zur analogen Übertragung der elektrische Größen von Messwerten und/oder Stellwerten ist die 0/4..20-mA-Stromschleife bekannt und als Industriestandard implementiert. Darüber hinaus sind digitale Übertragungssysteme - wie HART, Profibus, FoundationFieldbus - zur Übertragung der elektrische Größen von Messwerten und/oder Stellwerten bekannt. Nachteiligerweise erfüllen diese Übertragungssysteme nicht die Anforderungen der "Funktionalen Sicherheit" gemäß den internationalen Normen IEC 61508 sowie IEC61511.

Die Bedienung solcher Feldgeräte ist vor unauthorisierter Benutzung geschützt. Dazu ist zumindest bei Veränderung von Einstellungen des Feldgeräts die Eingabe einer gültigen Benutzerkennung und eines gültigen Passworts über die Tastatur der Mensch-Maschine-Schnittstelle des Feldgeräts oder des lokalen Bediengeräts vorgesehen.

Ein weiteres Sicherheitsmerkmal derartiger Feldgeräte besteht darin, dass die Bedienung des Feldgeräts nach einer vorgegebenen Anzahl fehlerhafter Eingaben von Kombinationen aus Benutzerkennung und Passwort gesperrt wird. Während des Bestehens der Sperre können keine Einstellungen an dem Feldgerät vorgenommen werden. Diese Sperre kann nur durch eine vorgegebene Prozedur, welche unmittelbar am Feldgerät durch einen authorisierten Benutzer auszuführen ist, mittels eines hierzu vorgesehenen Bedienelements - bespielsweise RESET-Taste - aufgehoben werden. Aus Sicherheitsgründen wird das Feldgerät bei einem RESET auf die Werkseinstellungen zurückgesetzt; also geht die eingestellte Konfiguration des Feldgeräts nachteiligerweise verloren. Das Rücksetzen des Feldgeräts im laufenden Prozessbetrieb unter Verlust der Konfiguration ist für den Betreiber einer dieses Feldgerät umfassenden Prozessanlage unakzeptabel.

Aus der EP 1403749 A1 ist ein Prozessleitsystem bekannt, das aus einer Mehrzahl räumlich verteilter, miteinander vernetzter Netzwerkteilnehmer besteht, zwischen denen Daten mit gesicherter Kommunikation ausgetauscht werden, wobei die Integrität der Daten auf dem Austausch von Zertifikaten basiert. Das Prozessleitsystem weist eine zentrale Zertifizierungsstelle auf, die integraler Bestandteil des Prozessleitsystems ist und die Zertifikate zuweist und verteilt.

Darüber hinaus ist aus der DE 10 2011 108 003 A1 ein Prozessleitsystem bestehend aus einer Mehrzahl räumlich verteilter, miteinander vernetzter Netzwerkteilnehmer mit gesicherter Kommunikation zwischen den Netzwerkteilnehmern bekannt, wobei die Integrität der Kommunikation auf dem Austausch von Zertifikaten basiert, wobei das Prozessleitsystem eine zentrale Zertifizierungsstelle aufweist, die integraler Bestandteil des Prozessleitsystems ist und die Zertifikate zuweist und verteilt. Dabei ist das vorhandene Melde- und Protokollsystem des Prozessleitsystems ausgebildet, die Funktionen der Schlüsselverwaltung mit dem Prozessleitsystem zu überwachen und zu protokollieren, indem die Ereignisse in Form von Systemmeldungen erfasst und gespeichert werden.

Die bekannten technischen Lösungen setzen jedoch eine permanent bestehende Kommunikationsverbindung zwischen den Einrichtungen mit gesicherter Kommunikation voraus.

Darüber hinaus ist aus der DE 10 2012 214 018 B3 ein Verfahren zur Autorisierung eines Nutzers durch ein tragbares Kommunikationsgerät bekannt. Dabei werden durch das tragbare Kommunikationsgerät erste Informationen zur Identifizierung des Feldgerätes erfasst. Von dem tragbaren Kommunikationsgerät werden die ersten Informationen und zweite Informationen zur Identifizierung des tragbaren Kommunikationsgerätes oder seines Nutzers zu einem System gesendet. Das System ermittelt eine erste Zugangsinformation in Abhängigkeit von den ersten Informationen und den zweiten Informationen und sendet die ersten Informationen an das tragbare Kommunikationsgerät. Das tragbare Kommunikationsgerät überträgt die zweiten Informationen und die erste Zugangsinformation zu dem Feldgerät. Das Feldgerät ermittelt eine zweite Zugangsinformation in Abhängigkeit von den zweiten Informationen und gleicht die erste Zugangsinformation mit der zweiten Zugangsinformation ab. Falls die erste Zugangsinformation und die zweite Zugangsinformation übereinstimmen, wird ein Zugang zu dem Feldgerät gewährt.

Nachteilig an dieser auf einem symmetrischen Verschlüsselungsverfahren beruhenden technischen Lösung ist der hohe Aufwand. Der systemseitige Aufwand ist geprägt durch die Anzahl zu verwaltender, feldgeräteindividueller Schlüssel. In allen Feldgräten ist der rechentechnische Aufwand zur Verarbeitung der Zugangsinformation hoch.

Schließlich ist aus der DE 10 2014 112 611 A1 ein Verfahren zur einseitigen oder wechselseitigen Authentifikation mindestens einer ersten Einheit, insbesondere einem Mobilgerät, an mindestens einer zweiten Einheit, insbesondere einem Feldgerät, innerhalb einer Anlage, insbesondere im Bereich der Prozessautomatisierungstechnik, bekannt. Der ersten und zweiten Einheit werden Sicherheitsrichtlinien bereitgestellt, auf deren Regeln Freischaltcodes generiert werden. Dabei umfasst die Sicherheitsrichtlinie der zweiten Einheiten jeden potentiell am Verfahren beteiligten Teilnehmer aus den Gruppe der ersten Einheiten.

Nachteiligerweise wird dabei in Kauf genommen, dass jede neu hinzutretende erste Einheit in die Sicherheitsrichtlinien aller zweiten Einheiten der Anlage einzupflegen sind. Dies stellt bereits bei mittelgroßen Anlagen einen beträchtlichen Aufwand dar und ist zudem fehlerträchtig, so dass die beabsichtigte sichere Authentifikation der Teilnehmer unterlaufen wird. Zudem handeln die beteiligten Einheiten ihre Authentifikation untereinander ohne Verfikation durch eine übergeordnete Sicherheitseinrichtung aus. Dies wird allgemein als Sicherheitsrisiko angesehen, da die Verbindung durch eine Man-In-The-Middle-Attacke gestört werden kann.

Der Erfindung liegt daher die Aufgabe zugrunde, ein Feldgerät der Prozessautomatisierung, das während des bestimmungsgemäßen Gebrauchs keine gesicherte Verbindung zu einem Netzwerk der Prozessteuerung aufweist, authentifiziert mit geringem Aufwand zu entsperren.

Erfindungsgemäß wird diese Aufgabe durch ein Verfahren gemäß den Merkmalen des Anspruchs 1 gelöst. Vorteilhafte Ausgestaltungen der Erfindung sind jeweils in den rückbezogenen Ansprüchen angegeben.

Die Erfindung geht aus von einem Feldgerät mit zumindest einer Mensch-Maschine-Schnittstelle umfassend eine Anzeigevorrichtung und eine Tastatur, welche zur Bedienung des Feldgeräts geeignet ist, sowie eine Kommunikationsschnittstelle zum Anschluss eines lokalen Bediengeräts, wobei das Feldgerät während des bestimmungsgemäßen Gebrauchs keine gesicherte Verbindung zu einem Netzwerk zur Prozessteuerung aufweist. Aus Sicherheitsgründen wird die Bedienung des Feldgeräts nach einer vorgegebenen Anzahl fehlerhafter Eingaben von Kombinationen aus Benutzerkennung und Passwort gesperrt. Darüber hinaus weist das Feldgerät ein gesondertes Bedienelement zum Entsperren auf. Schließlich geht die Erfindung davon aus, dass der lokale Bediener durch eine Benutzerkennung und ein Passwort authentifiziert ist.

Der Kern der Erfindung besteht darin, im Feldgerät einen eindeutigen zufälligen Anfrageschlüssel zu generieren, welcher dem Feldgerät bekannt ist und welcher mit Hilfe eines lokalen Bediengeräts unter Verwendung der Authentifikation eines lokalen Bedieners über gesicherte Verbindung zu einem vertrauenswürdigen Server zu übertragen und von diesem vertrauenswürdigen Server unter Verwendung eines asymmetrischen Verschlüsselungsverfahrens mit dessen privatem Schlüssel signiert als signierten Antwortschlüssel zurückzuerhalten.

Zum authentifizierten Entsperren des Feldgeräts kennt das Feldgerät den öffentlchen Schlüssel des vertrauenswürdigen Servers und verifiziert den Antwortschlüssel mit dem Anfrageschlüssel.

Das Feldgerät hat vorrichtungsgemäß ein eindeutiges Identifikationsmerkmal und ein Mittel zur Erzeugung und Ausgabe einer Zufallszahl auf Anforderung, welches zusammen als Anfrageschlüssel dient.

Darüber hinaus ist eine lokale Bedieneinrichtung vorgesehen, welche mit der Kommunikationsschnittstelle zum Anschluss eines lokalen Bediengeräts des Feldgeräts verbunden ist. Die lokale Bedieneinrichtung ist zumindest temporär über ein gesichertes Kommunikationsnetzwerk mit einem vertrauenswürdigen Server verbunden, wobei die gesicherte Verbindung über das Kommunikationsnetzwerk mit den Authentifikationsmerkmalen des lokalen Bedieners authentifiziert ist. Darüber hinaus weist die lokale Bedieneinrichtung Mittel zum Abruf des eindeutigen Anfrageschlüssels bestehend aus dem Identifikationsmerkmal und der Zufallszahl aus dem Feldgerät über die lokale Verbindung zwischen dem Feldgerät und der lokalen Bedieneinrichtung sowie zur Übermittlung des Anfrageschlüssels an den vertrauenswürdigen Server über die gesicherte Verbindung auf.

Der vertrauenswürdige Server weist einen privaten Schlüssel auf und ist ausgebildet, über die mit den Authentifikationsmerkmalen des lokalen Bedieners gesicherte Verbindung den übermittelten Anfrageschlüssel entgegenzunehmen, zu signieren und als signierte Nachricht über die gesicherte Verbindung an das lokale Bediengerät zurückzusenden.

Das Feldgerät ist ausgebildet, aus der signierten Nachricht des vertrauenswürdigen Servers mit dem öffentlichen Schlüssel den Antwortschlüssel zu extrahieren und mit dem Anfrageschlüssel zu vergleichen. Das Feldgerät ist ferner dazu ausgebildet, bei Identität des Antwortschlüssels mit dem Anfrageschlüssel die vorgegebene Prozedur zum authentifizierten Entsperren der lokalen Bedienung des Feldgeräts unter Aufrechterhaltung der bestehenden Konfiguration auszuführen.

Die Übermittlung des Antwortschlüssels unter Verwendung eines asymmetrischen Verschlüsselungsverfahrens, bei dem die zentrale Einrichtung, hier der vertrauenswürdige Server, mit einem privaten Schlüssel und eine Mehrzahl von dezentralen Einrichtungen, hier die Feldgeräte, mit einem zugehörigen öffentlichen Schlüssel ausgestattet sind, hat den Vorteil, dass unabhängig von Anzahl der Feldgeräte, im vertrauenswürdigen Server nur ein Schlüssel, nämlich der private Schlüssel, vorgehalten werden muss, so dass der Aufwand für die Schlüsselverwaltung in der zentralen Einrichtung gering bleibt.

Verfahrensgemäß, wird die Aufgabe durch die folgenden Schritte gelöst. In einem ersten Schritt wird ein lokales Bediengerät zumindest logisch mit einem Feldgerät verbunden, wobei das Feldgerät zumindest eine Mensch-Maschine-Schnittstelle aufweist, wobei die Mensch-Maschine-Schnittstelle eine Anzeigevorrichtung und eine Tastatur, über die das Feldgerät bedienbar ist, umfasst, und wobei das Feldgerät weiterhin eine Kommunikationsschnittstelle zum Anschluss eines lokalen Bediengeräts aufweist, wobei das Feldgerät während des bestimmungsgemäßen Gebrauchs keine gesicherte Verbindung zu einem Netzwerk zur Prozesssteuerung aufweist.

In einem zweiten Schritt wird mit den Authentifikationsmerkmalen des lokalen Bedieners eine gesicherte Verbindung zwischen dem lokalen Bediengerät und einem vertrauenswürdigen Server aufgebaut.

In einem dritten Schritt wird im Feldgerät ein Anfrageschlüssel generiert. Dazu wird auf Anforderung eine Zufallszahl erzeugt. Die Anforderung wird durch einen lokalen Bediener unmittelbar am Feldgerät initiiert. Der Anfrageschlüssel wird aus der Zufallszahl und dem eindeutigen Identifikationsmerkmal des Feldgeräts gebildet.

In einem vierten Schritt wird der Anfrageschlüssel über das lokale Bediengerät und die gesicherte Verbindung zu dem vertrauenswürdigen Server gesendet.

In einem fünften Schritt wird durch den vertrauenswürdigen Server durch Signierung aus dem Anfrageschlüssel eine Antwort gebildet und als signierter Antwortschlüssel bereitgestellt.

In einem sechsten Schritt wird der signierte Antwortschlüssel über die gesicherte Verbindung zwischen dem vertrauenswürdigen Server und dem lokalen Bediengerät an das lokale Bediengerät und über die lokale Verbindung weiter zum Feldgerät übertragen.

In einem siebten Schritt wird aus dem signierten Antwortschlüssel mit dem öffentliche Schlüssel der Antwortschlüssel extrahiert und mit dem Anfrageschlüssel verglichen.

Bei Übereinstimmung der Idenfikation und Zufallszahl des Anfrageschlüssels im Antwortschlüssel wird in einem achten Schritt die vorgegebene Prozedur zum authentifizierten Entsperren der lokalen Bedienung des Feldgeräts unter Aufrechterhaltung der bestehenden Konfiguration im Feldgerät freigeschaltet.

Schließlich wird in einem neunten Schritt das Feldgerät für die Bedienung entsperrt. Dabei bleibt die bestehende Konfiguration erhalten. Anschließend ist das Feldgerät für die Bedienung über die Tastatur der Mensch-Maschine-Schnittstelle des Feldgeräts oder über die Tastatur des lokalen Bediengeräts freigegeben.

Im Ergebnis ist das Feldgerät wieder in vollem Umfange bei Aufrechterhaltung der bestehenden Konfiguration bedienbar.

Vorteilhafterweise ist eine gesonderte Ausrüstung des Feldgeräts zur Etablierung und Aufrechterhaltung einer gesicherten Verbindung zu einem vertrauenswürdigen Server verzichtbar.

Ein besonderer Vorteil der erfindungsgemäßen Lösung ist darin zu sehen, dass sie mit geringem Aufwand in bestehende Prozessanlagen mit einer Vielzahl von Feldgeräten ohne Eingriff in die bestehende Anlagentopologie nachrüstbar ist.

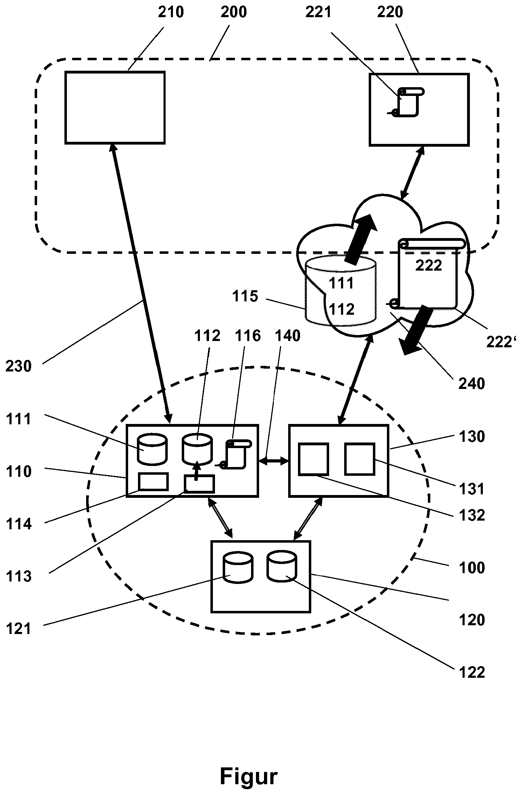

Die Erfindung wird nachstehend anhand eines Ausführungsbeispiels näher erläutert. In der einzigen Figur ist ein Feldgerät **110** gezeigt, das mit einer Prozesssteuerung **210** über ein Netzwerk **230** zur Prozesssteuerung verbunden ist. Als Prozesssteuerung **210** ist jede Einrichtung geeignet, welche zur zielgerichteten Beeinflussung eines technischen Prozesses ausgebildet ist und beispielsweise aber nicht abschließend als Regler, als speicherprogrammierbare Steuerung oder als Prozessleitsystem ausgebildet ist. Das Netzwerk **230** zur Prozesssteuerung umfasst alle Elemente inclusive Verteiler, Router, Remote-I/O und dergleichen, welche dem Datenaustausch zwischen der Prozesssteuerung **210** und dem Feldgerät **110** dienen. Zumindest werden über das Netzwerk **230** zur Prozesssteuerung Prozessdaten zwischen der Prozesssteuerung **210** und dem Feldgerät **110** ausgetauscht. Im einfachsten Fall ist dazu eine 0/4..20-mA-Stromschleife geeignet. Darüber hinaus können Diagnosedaten, Statusmeldungen und dergleichen zwischen der Prozesssteuerung **210** und dem Feldgerät **110** ausgetauscht werden, beispielsweise über das HART-Protokoll. Weiterhin kann das Netzwerk **230** zur Prozesssteuerung durch für sich bekannte Feldbusse gebildet sein. Das Netzwerk **230** zur Prozesssteuerung erfüllt jedoch nicht die Anforderungen der "Funktionalen Sicherheit" gemäß den internationalen Normen IEC 61508 sowie IEC61511.

Das Feldgerät **110** weist eine Mensch-Maschine-Schnittstelle **114** umfassend eine Anzeigevorrichtung und eine Tastatur auf, welche zur - zumindest rudimentären - Bedienung des Feldgeräts **110** geeignet ist. Zur erweiterten Bedienung ist das Feldgerät **110** mit einer - in der Figur nicht näher bezeichneten - Kommunikationsschnittstelle zum Anschluss eines lokalen Bediengeräts **130** ausgerüstet.

Im lokalen Bereich **100** des Feldgeräts **110** ist zumindest temporär ein lokales Bediengerät **130** vorgesehen, welches mit der Kommunikationsschnittstelle zum Anschluss eines lokalen Bediengeräts **130** des Feldgeräts **110** über eine lokale Verbindung **140** verbunden ist. Als lokale Bediengeräte **130** sind insbesondere aber nicht abschließend tragbare Computer, wie Notebooks oder Tablet-Computer, sowie Smartphones geeignet, welche insbesondere aber nicht abschließend drahtgebunden über USB oder drahtlos über Infrarot, NFC oder Bluetooth mit dem Feldgerät **110** kommunizieren. Zur lokalen Bedienung des Feldgeräts **110** befindet sich ein Bediener **120** gleichwohl im lokalen Bereich **100** in Reichweite zum Feldgerät **110** und zum lokalen Bediengerät **130**. Der lokale Bereich **100** ist begrenzt durch die Reichweite des Bedieners **120.** Alles darüber Hinausgehende gehört zu einem fernen Bereich **200.**

Das lokalen Bediengerät **130** ist zumindest mit einer Tastatur **131** und einem Display **132** ausgestattet. Dabei kann ein berührungssensitives Display **132** vorgesehen sein, auf welchem eine Tastatur **131** dargestellt und zur Bedienung vorgehalten wird.

Die Bedienung des Feldgeräts **110** ist vor unauthorisierter Benutzung geschützt. Dazu ist zumindest bei Veränderung von Einstellungen des Feldgeräts **110** die Eingabe einer gültigen Benutzerkennung und eines gültigen Passworts über die Tastatur der Mensch-Maschine-Schnittstelle des Feldgeräts **110** oder des lokalen Bediengeräts **130** vorgesehen. Die Zugangsdaten **121** - Benutzerkennung und Passwort - des Feldgeräts **110** sind dem Bediener **120** bekannt.

Das Feldgerät **110** weist ein eindeutiges Identifikationsmerkmal **111** auf, welches aus der Seriennummer, der Herstellerkennung und/oder einer spezifischen Kennung innerhalb der Prozesssteuerungsanlage gebildet sein kann.

Darüber hinaus ist das Feldgerät **110** mit einem Zufallszahlengenerator **113** ausgerüstet, welcher auf Anforderung eine Zufallszahl **112** ausgibt.

Zum authentifizierten Entsperren des Feldgeräts **110** wird im Feldgerät **110** die Erzeugung einer Zufallszahl **112** durch den Zufallszahlengenerator **113** mittels eines Kommando angefordert und ein Anfrageschlüssel **115** generiert, welcher dem Feldgerät **110** bekannt ist. Dieser Anfrageschlüssel **115** wird aus der Zufallszahl **112** und dem eindeutigen Identifikationsmerkmal **111** gebildet. Das Kommando wird in einfachster Ausführungsform durch Betätigung einer Taste der Mensch-Maschine-Schnittstelle **114** des Feldgeräts **110** ausgelöst. In einer weiteren Ausführungsform kann das Kommando über die Tastatur **131** des lokalen Bediengeräts **130** initiiert werden.

Der Bediener **120** im lokalen Bereich **100** ist zum authentifizierten Zugriff auf einen vertrauenswürdigen Server **220** im fernen Bereich **200** berechtigt. Dazu ist dem Bediener **120** ein Authentifikationsmerkmal **122** zugewiesen. Dieses Authentifikationsmerkmal **122** ist typischerweise durch eine Kombination aus Benutzerkennung und Passwort gebildet. Der vertrauenswürdige Server **220** ist mit einer Signatur in Form eines privaten Schlüssels **221** ausgestattet.

Mit dem Authentifikationsmerkmal **122** des Bedieners **120** wird über ein vom Netzwerk **230** der Prozesssteuerung unabhängiges Kommunikationsnetzwerk **240** eine gesicherte Verbindung zwischen dem lokalen Bediengerät **130** im lokalen Bereich **100** und dem vertrauenswürdigen Server **220** im fernen Bereich **200** aufgebaut. In bevorzugter Ausführungsform ist das Internet das Kommunikationsnetzwerk **240.**

In vorteilhafter Ausgestaltung der Erfindung wird mit dem vertrauenswürdigen Server **220** die Berechtigung des Bedieners **120** zum Entsperren des Feldgeräts **110** geprüft. Dazu weist der vertrauenswürdige Server **220** einen Speicher auf, in dem die Authentifikationsmerkmale **122** aller Bediener **120** gespeichert sind. Darüber hinaus weist der vertrauenswürdige Server **220** einen weiteren Speicher auf, in dem die eindeutigen Identifikationsmerkmale **111** der Feldgeräte **110** hinterlegt sind.

Über die gesicherte Verbindung des Kommunikationsnetzwerk **240** wird der Anfrageschlüssel **115** aus dem Feldgerät **110** über das lokale Bediengerät **130** zum vertrauenswürdigen Server **220** übertragen. Im vertrauenswürdigen Server **220** wird die Antwort inklusive Anfrageschlüssel **115** mit dem privaten Schlüssel **221** des vertrauenswürdigen Servers **220** signiert und als signierter Antwortschlüssel **222**' über die gesicherte Verbindung des Kommunikationsnetzwerk **240** zum Feldgerät **110** zurück übertragen.

In vorteilhafter Ausgestaltung der Erfindung wird mit dem vertrauenswürdigen Server **220** die Gültigkeit des Anfrageschlüssels **115** geprüft. Der Anfrageschlüssel **115** ist gültig, wenn das Identifikationsmerkmal **111** in dem vertrauenswürdigen Server **220** hinterlegt ist und optional der Benutzer berechtigt ist

Das Feldgerät **11**0 empfängt den signierten Antwortschlüssel **222'** vom vertrauenswürdigen Server **220** und extrahiert aus dem signierten Antwortschlüssel **222'** den Antwortschlüssel **222** mit Hilfe eines öffentlichen Schlüssels **116.**

Bei Übereinstimmung des Anfrageschlüssels **115** und des Antwortschlüssels **222** wird die vorgegebene Prozedur zum authentifizierten Entsperren der lokalen Bedienung des Feldgeräts **110** unter Aufrechterhaltung der bestehenden Konfiguration im Feldgerät **110** freigeschaltet.

Schließlich wird das Feldgerät **110** für die Bedienung entsperrt. Dabei bleibt die bestehende Konfiguration des Feldgeräts **110** erhalten. Anschließend ist das Feldgerät **110** für die Bedienung über die Tastatur der Mensch-Maschine-Schnittstelle **114** des Feldgeräts **110** oder über die Tastatur **131** des lokalen Bediengeräts **130** freigegeben.

Im Ergebnis ist das Feldgerät **110** wieder in vollem Umfange bei Aufrechterhaltung der bestehenden Konfiguration bedienbar.

### Bezugszeichenliste

- 100: lokaler Bereich
- 110: Feldgerät
- 111: Identifikationsmerkmal
- 112': Zufallszahl
- 113: Zufallszahlengenerator
- 114: Mensch-Maschine-Schnittstelle
- 115: Anfrageschlüssel
- 116: öffentlicher Schlüssel
- 120: Bediener
- 121: Zugangsdaten
- 122: Authentifikationsmerkmal des lokalen Bedieners
- 130: Bediengerät
- 131: Tastatur
- 132: Display
- 140: lokale Verbindung
- 200: ferner Bereich
- 210: Prozesssteuerung
- 220: vertrauenswürdiger Server
- 221: privater Schlüssel
- 222: Antwortschlüssel
- 222': signierter Antwortschlüssel
- 230: Netzwerk der Prozessteuerung
- 240: Kommunikationsnetzwerk

## Patentansprüche

1. Verfahren zur gesicherten Bedienung eines Feldgeräts (110), wobei das Feldgerät (110) zumindest eine Mensch-Maschine-Schnittstelle (114) aufweist, wobei die Mensch-Maschine-Schnittstelle (114) eine Anzeigevorrichtung und eine Tastatur, über die das Feldgeräts (110) bedienbar ist, umfasst und wobei das Feldgerät (110) weiterhin eine Kommunikationsschnittstelle zum Anschluss eines lokalen Bediengeräts (130) aufweist, wobei das Feldgerät (110) während des bestimmungsgemäßen Gebrauchs keine gesicherte Verbindung zu einem Netzwerk (230) zur Prozessteuerung aufweist,
wobei
- das Feldgerät (110) zumindest logisch über eine lokale Verbindung (140) mit dem lokalen Bediengeräts (130) verbunden wird,
- mit Authentifikationsmerkmalen (122) eines lokalen Bedieners (120) eine gesicherte Verbindung zwischen dem lokalen Bediengerät (130) und einem vertrauenswürdigen Server (220) aufgebaut wird,
- im Feldgerät (110) ein Anfrageschlüssel (115) generiert wird
- der Anfrageschlüssel (115) über das lokale Bediengerät (130) und eine gesicherte Verbindung zu dem vertrauenswürdigen Server (220) übermittelt wird,
- durch Signierung des Anfrageschlüssel (115) mit einem privaten Schlüssel (221) des vertrauenswürdigen Servers (220) ein signierter Antwortschlüssel (222') gebildet wird,
- der signierte Antwortschlüssel (222') über die gesicherte Verbindung zwischen dem vertrauenswürdigen Server (220) und dem lokalen Bediengerät (130) an das lokale Bediengerät (130) und über die lokale Verbindung (140) weiter zum Feldgerät (110) übertragen wird,
- im Feldgerät (110) mit einem öffentlichen Schlüssel aus dem signierten Antwortschlüssel (222') der Antwortschlüssel (222) extrahiert wird,
- der Antwortschlüssel (222) mit dem Anfrageschlüssel (115) verglichen wird und
- bei Übereinstimmung des Antwortschlüssels (222) mit dem Anfrageschlüssel (115) eine vorgegebene Prozedur zum authentifizierten Entsperren der lokalen Bedienung des Feldgeräts (110) unter Aufrechterhaltung der bestehenden Konfiguration im Feldgerät (110) freigeschaltet wird.

2. Verfahren nach Anspruch 1
wobei der Anfrageschlüssel (115) aus einem eindeutigen Identifikationsmerkmal (111) des Feldgeräts (110) und einer Zufallszahl (112) gebildet wird.

3. Verfahren nach Anspruch 1
wobei mit dem vertrauenswürdigen Server (220) die Berechtigung des Bedieners (120) zum Entsperren des Feldgeräts (110) geprüft wird.

4. Verfahren nach Anspruch 1
wobei mit dem vertrauenswürdigen Server (220) die Gültigkeit des Anfrageschlüssels (115) geprüft wird.

## Claims

1. Method for securely operating a field device (110), wherein the field device (110) has at least one human-machine interface (114), wherein the human-machine interface (114) comprises a display apparatus and a keypad, by way of which the field device (110) can be operated, and wherein the field device (110) additionally has a communication interface for connecting a local control unit (130), wherein the field device (110) does not have a secure connection to a network (230) for process control while being used as intended,
wherein
- the field device (110) is at least logically connected to the local control unit (130) by way of a local connection (140),
- authentication features (122) of a local operator (120) are used to set up a secure connection between the local control unit (130) and a trusted server (220),
- a request key (115) is generated in the field device (110),
- the request key (115) is conveyed to the trusted server (220) by way of the local control unit (130) and a secure connection,
- a signed response key (222') is formed by signing the request key (115) using a private key (221) of the trusted server (220),
- the signed response key (222') is transmitted to the local control unit (130) by way of the secure connection between the trusted server (220) and the local control unit (130) and on to the field device (110) by way of the local connection (140),
- the response key (222) is extracted from the signed response key (222') in the field device (110) using a public key,
- the response key (222) is compared with the request key (115), and
- if the response key (222) matches the request key (115) then a predefined procedure for authenticated unlocking of local operation of the field device (110) is enabled while maintaining the existing configuration in the field device (110) .

2. Method according to Claim 1,
wherein
the request key (115) is formed from a unique identification feature (111) of the field device (110) and a random number (112).

3. Method according to Claim 1,
wherein
the authorization of the operator (120) to unlock the field device (110) is checked with the trusted server (220) .

4. Method according to Claim 1,
wherein
the validity of the request key (115) is checked with the trusted server (220).

## Revendications

1. Procédé permettant de commander de manière sécurisée un appareil de terrain (110), dans lequel l'appareil de terrain (110) présente au moins une interface homme/machine (114), l'interface homme/machine (114) comprenant un dispositif d'affichage et un clavier permettant de commander l'appareil de terrain (110), et dans lequel l'appareil de terrain (110) présente en outre une interface de communication pour la connexion d'un module de commande local (130), l'appareil de terrain (110) ne présentant pendant son utilisation conforme aucune liaison sécurisée avec un réseau (230) pour la commande de processus,
dans lequel
- l'appareil de terrain (110) est relié au module de commande local (130) au moins de manière logique par une liaison locale (140),
- une liaison sécurisée entre le module de commande local (130) et un serveur digne de confiance (220) est établie avec des particularités d'authentification (122) d'un opérateur local (120),
- une clé de demande (115) est générée dans l'appareil de terrain (110),
- la clé de demande (115) est transmise au serveur digne de confiance (220) par le module de commande local (130) et une liaison sécurisée,
- une clé de réponse signée (222') est formée par la signature de la clé de demande (115) à l'aide d'une clé privée (221) du serveur digne de confiance (220),
- la clé de réponse signée (222') est transmise au module de commande local (130) par la liaison sécurisée entre le serveur digne de confiance (220) et le module de commande local (130) et est retransmise à l'appareil de terrain (110) par la liaison locale (140),
- la clé de réponse (222) est extraite dans l'appareil de terrain (110) à l'aide d'une clé publique à partir de la clé de réponse signée (222'),
- la clé de réponse (222) est comparée avec la clé de demande (115), et
- en cas de coïncidence entre la clé de réponse (222) et la clé de demande (115) une procédure prédéfinie pour le déverrouillage authentifié de la commande locale de l'appareil de terrain (110) est débloquée en maintenant la configuration existante dans l'appareil de terrain (110).

2. Procédé selon la revendication 1, dans lequel la clé de demande (115) est formée à partir d'une particularité d'identification univoque (111) de l'appareil de terrain (110) et d'un nombre aléatoire (112) .

3. Procédé selon la revendication 1, dans lequel le serveur digne de confiance (220) vérifie l'autorisation de l'opérateur (120) pour le déverrouillage de l'appareil de terrain (110).

4. Procédé selon la revendication 1, dans lequel le serveur digne de confiance (220) vérifie la validité de la clé de demande (115).
